# EUROPEAN PATENT APPLICATION

(11) **EP 4 116 053 A1**
(43) Date of publication of application: **11.01.2023**
(21) Application number: 21183946.9
(22) Date of filing: 06.07.2021
(51) Int. Cl.: B29B 11/16, F03D 1/06

(54) **METHOD FOR MANUFACTURING A PREFORM PART FOR A WIND TURBINE BLADE, PREFORM PART, WIND TURBINE BLADE AND WIND TURBINE**

(71) Applicant: Siemens Gamesa Renewable Energy A/S, 7330 Brande (DK)
(72) Inventor: Stecher, Harald, 9520 Skørping (DK)
(74) Representative: SGRE-Association

(57) **Abstract**

Method for manufacturing a preform part (6) for a wind turbine blade (2), comprising the steps:
- Providing at least one rigid core element (7), at least one reinforcement structure (8) consisting of a fiber-based material and at least one adhesive sheet (11) of a meltable adhesive,
- Arranging the adhesive sheet (11) in between the core element (7) and the reinforcement structure (8), and
- Bonding the core element (7) to the reinforcement structure (8) by heating and subsequent cooling of the adhesive sheet (11) for creating an adhesive layer (9) between the core element (7) and the reinforcement structure (8), wherein the adhesive layer (9) consists of the adhesive and is partially pervious for a liquid.

## Description

The invention relates to a method for manufacturing a preform part for a wind turbine blade. Furthermore, the invention relates to a preform part, a wind turbine blade and a wind turbine.

Preform parts used for the manufacture of wind turbine blades usually comprise several layers of a fiber material. In addition, also a core material may be placed on or within the stack of fiber material. When preparing the stack of components for manufacturing the preform part, it is known to use a powder binder to adhere the components together in order to immobilize the stacked components forming the preform part. The powder binder may be activated by heat application, for instance after the components have been placed in a vacuum.

However, manufacturing preforms comprising a core material in addition to one or more reinforcement layers of a fiber material may be difficult, since an adequate adhesion between the core material and the fiber material has to be achieved. An insufficient adhesion bears the risk that the bond between the core material and the fiber material breaks, for instance when the preform part is lifted. This may cause a lower part of the manufactured preform part to fall off or to detach during handling of the preform part.

Therefore, it is an object of the invention to provide a method for manufacturing a preform part for wind turbine blades which improves the adherence between at least one rigid core element and at least one reinforcement structure consisting of a fiber-based material.

According to the invention, this problem is solved by a method for manufacturing a preform part for a wind turbine blade, comprising the steps:
- Providing at least one rigid core element, at least one reinforcement structure consisting of a fiber-based material and at least one adhesive sheet of a meltable adhesive,
- Arranging the adhesive sheet in between the core element and the reinforcement structure, and
- Bonding the core element to the reinforcement structure by heating and subsequent cooling of the adhesive sheet for creating an adhesive layer between the core element and the reinforcement structure, wherein the adhesive layer consists of the adhesive and is partially pervious for a liquid.

By providing the adhesive sheet of a meltable adhesive for bonding one or more rigid core elements to one or more reinforcement structures consisting of a fiber-based material, the adherence between the rigid core element and the fiber-based material of the reinforcement structure is improved. The usage of the adhesive sheet prevents that the adhesive agglomerates in the voids between the fibers or strands of the fiber-based material, as it may happen when a powder binder is used. Such an agglomeration of binder particles in the voids reduces the amount of binder particles, which are in contact with both the reinforcement structure and the rigid core element and therefore available for the bonding between the core element and the reinforcement structure.

The agglomeration of binder particles is in particular an issue when binding a rigid core element to a reinforcement structure, or a fiber mat, respectively. Unlike the reinforcement structure, the core element is not smooth flexible so that voids between the core element and the fibers of the reinforcement structure may remain after bringing the core element into close contact to the reinforcement structure.

By using the adhesive sheet, the amount or the portion of the adhesive, which is available for bonding the reinforcement material to the core element, is increased so that the adherence between the core element and the reinforcement structure is improved. Advantageously, the usage of the adhesive sheet increases the surface available for bonding since a sheet, or a layer, respectively, of the meltable adhesive will stay in between the reinforcement structure and the core element and therefore may fully contribute to the adhesion between the core element and the reinforcement structure. The meltable adhesive may be or comprise for instance a thermoplastic material and/or other meltable reactive material.

A further advantage of the adhesive sheet is the defined amount of meltable adhesive that may be arranged between the core element and the reinforcement structure using the adhesive sheet. Furthermore, the meltable adhesive may distributed evenly between the core element and the reinforcement structure without effort.

The bonding between the core element and the reinforcement structure occurs by heating and subsequent cooling of the adhesive sheet. The heating and the cooling creates an adhesive layer from the adhesive sheet, which is arranged in between the core element and the reinforcement structure and bonds these elements together. The adhesive layer consists of the molten and solidified adhesive of the adhesive sheet. The bonding of the core element to the reinforcement structure causes a compaction or a pre-consolidation of the preform part adhering the core element at least locally to the reinforcement structure.

It is possible that the preform part comprises a plurality of core elements and/or a plurality of reinforcement structures. The core elements and/or the reinforcement structures may be arranged for instance on the molding surface of a mold used for forming the preform part to be manufactured. The core elements and/or the reinforcement structures may be arranged on the molding surface in a stack, wherein the layers of the stack each comprise one or more core elements and/or one or more reinforcement structures, or mats of fiber based material, respectively.

From the adhesive sheet, the adhesive layer is formed in such manner that it is partially pervious for a liquid. This allows for using the preform part afterwards in a resin-injection based process for manufacturing of a wind turbine blade. The adhesive layer, which is partially pervious for a liquid, is in particular pervious for a resin used in a resin-injection base manufacturing process. This allows that the resin may flow through the adhesive layer in the resin-injection based casting process, so that the entire preform part may be soaked with resin during the manufacture of the wind turbine blade. Hence, the adhesive layer is passible, or permeable, respectively, for a liquid, in particular a liquid or liquefied resin used in a wind turbine blade casting process.

Preferably, an adhesive layer comprising holes, which are passable by a liquid, is created. In particular, the holes, or openings, respectively, span between the core element and the reinforcement structure, so that the adhesive layer between the core element and the reinforcement structure may be passed by a liquid, in particular a liquid or liquefied resin. In other words, the holes may extend in the direction of the thickness of the adhesive layer, or the adhesive sheet, respectively.

In an embodiment, the holes in the adhesive layer are created during heating and/or cooling of the adhesive sheet and/or an adhesive sheet comprising holes is used, wherein the holes in the adhesive sheet form the holes in the adhesive layer after heating and cooling of the adhesive sheet. Hence, the holes in the adhesive layer may be created during the heating and/or the cooling or the adhesive sheet. In addition or alternatively, the holes may be present already in the adhesive sheet, which is arranged between the core element and the reinforcement structure. In the case that the holes are already present in the adhesive sheet, the holes created in the adhesive layer may have the same size as the holes in the adhesive sheet, or they may have different sizes caused by the heating and/or the cooling of the adhesive sheet during the bonding of the elements of the preform part.

Preferably, the hole density in the adhesive layer is at least 50 %. The hole density refers to the area of the adhesive layer perpendicular to the thickness of the adhesive layer or to the area which is in contact with the opposing surfaces of the core element and the reinforcement structure, respectively. In particular, also an adhesive sheet comprising holes may have a hole density of 50 % or more. The hole density of the adhesive layer and/or of an adhesive sheet may be for instance between 50 % and 95 %.

Preferably, a perforated foil and/or a plurality of interconnected strands, in particular a mesh, a grid, a web, and/or a fleece, of the meltable adhesive is used as adhesive sheet. The interconnected strands of the meltable adhesive may have a regular shape, a random shape, or a combination thereof. The strands of the meltable adhesive may be arranged for instance in an oriented mesh or as a regular grid or web, respectively. Also a random-orientation of the interconnected strands of the meltable material is possible, for instance in a random spiderweb structure.

The adhesive sheet may comprise one or more layer of interconnected strands of the adhesive material, hence the strands of the adhesive material may be interconnected in two or three dimensions. Hence, the adhesive sheet may comprise a plurality of stacked grids or meshes, each with a regular and/or a random shape. The interconnected strands of the adhesive sheet may also have an interwoven structure so that the strands of the meltable adhesive form a fleece that used as adhesive sheet.

In particular, the strands of the meltable adhesive are interconnected in such manner that holes extending through the thickness of the adhesive sheet are formed. It is also possible that the adhesive sheet is a perforated foil of the meltable adhesive. In particular, the foil is perforated by holes, or through-holes, respectively, that span through the thickness of the adhesive sheet.

The adhesive sheet may be provided for instance on a roll, from which it may be unrolled or unspooled and arranged in between the core elements and the reinforcement structure. In particular, when a perforated foil or a plurality of interconnected strands is used as adhesive sheet, the structure of the adhesive sheet is at least essentially maintained during the heating and the cooling of the adhesive sheet, so that the adhesive layer created from the adhesive sheets comprises a comparable geometry to the adhesive sheet. Hence, the adhesive sheet may have a perforated or porous structure, which is passable, or permeable, respectively, by a liquid like a resin. It is possible that a plurality of adhesive sheets is used, wherein the adhesive sheets are arranged as strips or panels adjacently to each other between the one or more core elements and the one or more reinforcement structures.

Preferably, an adhesive sheet with a thickness between 10 µm and 150 µm, in particular between 50 µm and 100 µm, is used. The thickness of the adhesive sheet, and the thickness of the adhesive layer, respectively, each span from the core element to the reinforcement structure. The width and/or the length of the adhesive sheet, or the adhesive layer, respectively, may be much larger than the thickness. The width and/or the length of the adhesive sheet, and/or the adhesive layer, respectively, may be for example in the order of centimeters to meters, depending on the sizes of the core element, the reinforcement structure and the preform part to be manufactured. The individual width of the interconnected strands of an adhesive sheet may be chosen larger than the size of the particles of a powder binder. For instance, the width, or the diameter, respectively, of the strands may be between 10 µm and 150 µm, in particular between 50 µm and 100 µm. The individual length of the strands may be much larger, for instance in the order of centimeters or meters, and may depend on the structure of the adhesive sheet and/or the position of the strand in the structure.

Preferably, a meltable adhesive with a melting temperature between 70 °C and 140 °C, preferably between 80 °C and 120 °C, is used. Advantageously, such a hot melt adhesive may have a melting temperature comparable to the melting temperature of a powder binder, so that comparable process steps may be used.

Preferably, a core element comprising or consisting of balsa woold and/or a polymer material is used and/or a reinforcement structure consisting of glass fibers, carbon fibers, and/or aramid fibers is used. As polymer material, for instance polyethylene terephthalate (PET) is used. The polymer material may be for instance a solidified polymer foam. The fiber material of the reinforcement structures may contain glass fibers, carbon fibers, aramid fibers or any combination thereof. The fiber material may have one or more layers of unidirectional fibers and/or one or more layers of woven fibers.

In an embodiment, at least one further reinforcement structure consisting of a fiber-based material and at least one further adhesive are provided, wherein the further reinforcement structure is stacked on the reinforcement structure and bonded to the reinforcement structure using the further adhesive. The further adhesive may be for instance a powder adhesive. The further adhesive is arranged for instance between the reinforcement structure and the further reinforcement structure for bonding these reinforcement structures.

In particular, the further adhesive may have a comparable melting point to the meltable adhesive of the adhesive sheet so that a mutual bonding of the adhesive sheet and the further adhesive may occur in one single heating step. Hence, also the bonding of the reinforcement structure to the further reinforcement structure by the further adhesive may occur in the same heating and/or cooling step as the bonding between the core element and the reinforcement structure, or during the pre-consolidation of the preform part, respectively.

A preform part according to the invention comprises at least one rigid core element, at least one reinforcement structure consisting of a fiber-based material and an adhesive layer arranged in between the core element and the reinforcement structure bonding the core element to the reinforcement structure, wherein the adhesive layer is formed from at least one molten and subsequently solidified adhesive sheet.

Preferably, the adhesive layer comprises a perforated foil and/or interconnected strands, in particular a mesh, a grid, a web, and/or a fleece, of the molten and solidified adhesive. The adhesive layer may be created from one or more adhesive sheets, which have a structure of a perforated foil and/or which comprise a plurality of interconnected strands, as described above in relation to the method for manufacturing.

The adhesive layer may be formed from one or more stripshaped or panel-shaped adhesive sheets, which may have been arranged adjacently to each other between the at least one core element and the at least one reinforcement structure during manufacture of the preform part.

Preferably, the adhesive layer comprises holes, which are passable by a liquid. The holes of the adhesive layer may be passable in particular by a liquid or liquefied resin, so that the preform part may be used in the manufacturing of a wind turbine blade.

Preferably, the hole density in the adhesive layer is at least 50 %. The adhesive layer may have a thickness between 10 µm and 150 µm, in particular between 50 µm and 100 µm.

All details and advantages of the method for manufacturing a preform part according to the invention apply correspondingly to the preform part according to the invention and vice versa.

A wind turbine blade according to the invention comprises at least one preform part according to the invention.

A wind turbine according to the invention comprises at least one wind turbine blade according to the invention.

The advantages and details of the method according to the invention and the preform part according to the invention apply correspondingly on the wind turbine blade according to the invention and the wind turbine according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a wind turbine according to the invention comprising at least one wind turbine blade according to the invention,
- Fig. 2: an embodiment of a preform part according to the invention,
- Fig. 3: a schematical depiction of the manufacturing of the preform part according to the invention for illustrating a method for manufacturing a preform part according to the invention, and
- Fig. 4: a depiction of the state of the art using a powder binder for bonding a core element to a fiber structure.

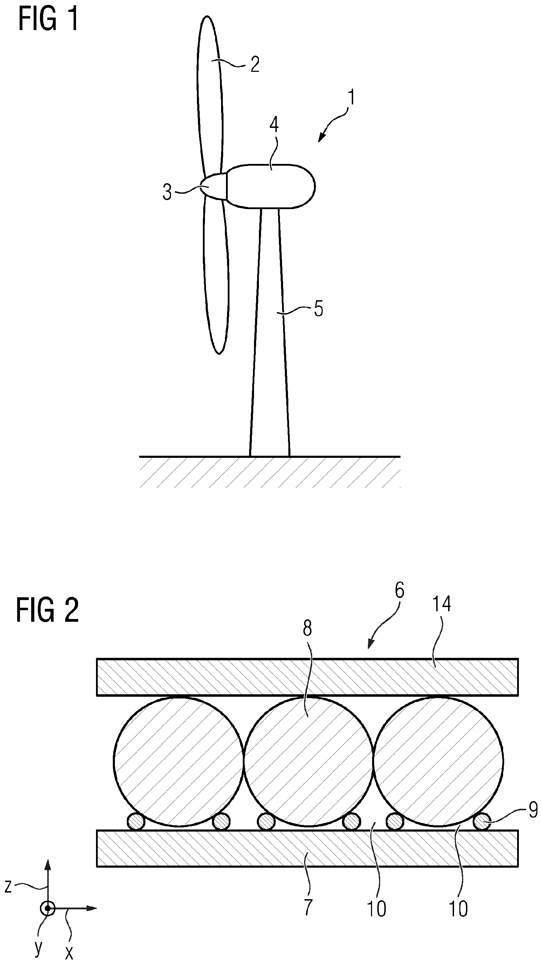

In fig. 1, an embodiment of a wind turbine 1 is shown. The wind turbine 1 comprises a plurality of wind turbines blades 2, which are attached to a hub 3 of the wind turbine 1. The hub 3 is mounted on the front side of a nacelle 4 of the wind turbine 1, wherein the nacelle 4 is supported on a tower 5 of the wind turbine 1. In the nacelle 4, a generator (not shown) is arranged for the generation of electrical energy from the wind-induced rotation of the wind turbine blades 2 and the hub 3.

For manufacturing wind turbines blades 2, preform parts may be used that comprise a plurality of components like fiber mats and/or rigid core elements, which are attached to each other. The usage of the preform parts comprising partly preconsolidated components facilitates the manufacturing of the wind turbine blades 2, since the arrangement of the plurality of components forming the wind turbine blade 2, in particular in a resin-injection based process, is facilitated. The usage of a preform part allows for instance a simultaneous handling and arrangement of a plurality of components, which are at least partly attached to each other forming the preform part.

In fig. 2, an embodiment of a preform part 6 is shown. The preform part 6 comprises at least one rigid core element 7, at least one reinforcement structure 8 consisting of a fiber-based material and an adhesive layer 9. The adhesive layer 9 is arranged in between the core element 7 and the reinforcement structure 8 and bonds the reinforcement structure 8 to the core element 7. The adhesive layer 9 is formed from at least one molten and subsequently solidified adhesive sheet 11, which is used during the manufacturing of the preform part 6.

The adhesive layer 9 created from the adhesive sheet 11 is partially pervious for a liquid. In particular, the adhesive layer 9 comprises holes 10, which are passable by a liquid, in particular by a liquid or liquefied resin used in a resin injection-based process for manufacturing a wind turbine blade 2.

The holes 10 and the adhesive layer 9 are created during heating and/or cooling of an adhesive sheet 11 used in a manufacturing process of the preform part 6. Additionally or alternatively, an adhesive sheet 11 comprising holes 12 may be used, wherein the holes 12 and the adhesive sheet 11 form the holes 10 in the adhesive layer 9 after heating and cooling of the adhesive sheet 11.

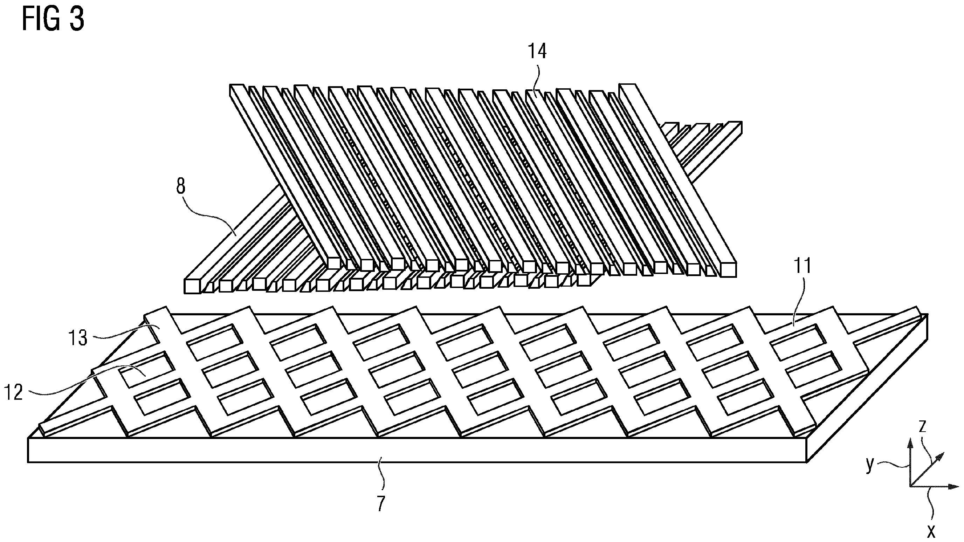

In fig. 3, the elements used for manufacturing a preform part 6 in an embodiment of a method for manufacturing a preform part are depicted. For manufacturing the preform part 6 as depicted in fig. 2, at least one rigid core element 7, at least one reinforcement structure 8 consisting of the fiber-based material and at least one adhesive sheet 11 of a meltable adhesive are provided. The components forming the preform part 6 may be arranged for instance on a convex or concave molding surface of a preform mold for obtaining the desired shape of the preform part 6.

The adhesive sheet 11 is arranged in between the core element 7 and the reinforcement structure 8. The core element 7 is bonded to the reinforcement structure 8 by heating and subsequent cooling of the adhesive sheet 11 for creating the adhesive layer 9 between the core element 7 and the reinforcement structure 8. For the heating and/or the cooling, a heating means and/or a cooling means of the preform mold may be used.

The adhesive sheet 11 comprises a plurality of interconnected strands 13, which encompass the holes 12 of the adhesive sheet 11. The adhesive sheet 11, or the strands 13, respectively, consist of a meltable adhesive. As meltable adhesive, a holt melt with a melting temperature between 70 °C and 140 °C, preferably between 80 °C and 120 °C may be used. The meltable adhesive may be or comprise for instance a thermoplastic material and/or other meltable reactive material.

The core element 7 may comprise or consist of balsa wood and/or polymer material, for instance of polyethylene terephthalate (PET) and/or solidified polymer foam. The reinforcement structure 8 comprises a fiber-based material, which consists of glass fibers, carbon fibers, aramid fibers or any combination thereof.

During the manufacturing of the preform part 6, the adhesive sheet 11 is heated and subsequently cooled for bonding the core element 7 to the reinforcement structure 8. Thereby, the structure of the adhesive sheet 11 may be maintained at least essentially, so that the adhesive layer 9 of the preform part 6 comprises a structure corresponding to the structure of the adhesive sheet 11. In particular, the holes 12 of the adhesive sheet 11 form the holes 10 or the adhesive layer 9.

Hence, the holes 10 in the adhesive layer 9 may have the same size as the holes 12 of the adhesive sheet 11. It is also possible the size of the holes 10 in the adhesive layer 9 is smaller or larger than the size of the holes 12 in the adhesive sheet 11, in particular since the heating and/or cooling of the meltable adhesive may change the structure and/or the geometry of the adhesive sheet 11 at least slightly.

The adhesive sheet 11 may have the structure of a mesh, a grid, a web and/or a fleece of the strands 13 of the meltable adhesive. The structure of the adhesive sheet 11 may be regular or random, wherein the depicted adhesive sheet 11 in fig. 3 comprises the shape of a regular mesh. It is possible that the adhesive sheet 11 comprises more than one layer of interconnected strands 13, so that for instance the adhesive sheet is formed by a plurality of stacked mesh structures.

Besides regular meshes, also random structures, for instance a random spider web structure, or a fleece structure comprising a plurality of interwoven strands of the meltable adhesive may be used as adhesive sheet 11. It is also possible that the adhesive sheet 11 is provided as a perforated foil comprising the holes 12. Alternatively, the adhesive sheet 11 may be provided as a continuous layer without holes, wherein the holes 10 in the adhesive layer 9 are created during the heating of the adhesive sheet 11, for instance by a partial melting of the adhesive layer 9.

The holes 12 in the adhesive sheet 11 are in particular through-holes extending in between the reinforcement structure 8 and the core element 7 of the preform part 6 to be manufactured. By creating comparable holes 10 in the adhesive layer 9, a passage of a resin during a resin-injection based process using the preform part 6 is enabled. In particular, a fast flow of the resin through the adhesive layer 9 may be obtained by providing sufficient holes 10 in the adhesive layer 9. The hole density in the adhesive layer 9 and/or the adhesive sheet 11, respectively, may be at least 50 %, in particular between 50 % and 95 %.

The adhesive sheet 11 may comprise a thickness between 10 µm and 150 µm, in particular between 50 µm and 100 µm. In fig. 3, the thickness of the adhesive layer is in the z-direction. The length and the width of the adhesive sheet in x-direction and y-direction, respectively, may be much larger than the thickness, in particular in the range of several centimeters to several meters.

In an adhesive sheet 11 comprising a plurality of interconnected strands 13, the individual strands may have a thickness, or a diameter, respectively between 10 µm and 150 µm, in particular between 50 µm and 100 µm. The length of the individual strands 13 may be much longer, in particular om the range of centimeters or meters.

The adhesive sheet 11 may be provided for instance on a roll, wherein one or more adhesive sheets in the shape of layers or strips are arranged in between the reinforcement structure 8 and the core element 7 during the manufacturing of the preform part 6. The usage of the adhesive sheet 11 has the further advantage that the defined amount of meltable adhesive can be placed between the core element 7 and a first fiber layer of a reinforcement structure 8 stacked on or underneath the core element 7. The thicker strands 13 of the meltable adhesive of the adhesive sheet 11 contribute to a better bond to a core element 7 since they will offer more surface area available or bonding than the powder binders.

Since the adhesive layer 9 of the preform part 6 depicted in fig. 2 is fabricated from the adhesive sheet 11, it is possible to obtain a comparable geometry of the adhesive layer 9 to the adhesive sheet 11. In particular, also the adhesive layer may have a hole density of at least 50 % and/or a thickness between 10 µm and 150 µm, in particular between 50 µm and 100 µm. In addition, also the adhesive layer 9 may be a mesh, a grid, a web, a fleece and/or a perforated foil of the molten and solidified adhesive of the adhesive sheet 11. If such a continuous adhesive sheet 11 with through-holes is used, the shape of the adhesive layer 9 may correspond to the shape of the adhesive sheet 11 after the formation of holes or openings induced by the heating and the subsequent cooling of the adhesive sheet 11.

It is possible that the preform part 6 to be manufactured comprises a further reinforcement structure 14, which is stacked on the reinforcement structure 8. Also the further reinforcement structure 14 may consist of a fiber-based material, in particular of glass fibers, carbon fibers, aramid fibers or any combination thereof. Between the further reinforcement structure 14 and the reinforcement structure 8 at least one further adhesive may be provided, wherein the further reinforcement structure 14 is bonded to the reinforcement structure 8 using the further adhesive. Since the reinforcement structures 8, 14 are smooth and flexible, a powder binder may be used for binding the reinforcement structures 8, 14.

The creation of an adhesive layer 9 comprising holes 10 between the core element 7 and the reinforcement structure 8 during the manufacturing of the preform part 6 enables a passage of a liquid, in particular liquid resin in a resin-injection based process through the adhesive layer 9 and hence in between the core element 7 and the fibers of the reinforcement structure 8. Furthermore, by the usage of one or more adhesive sheets 11 for bonding the core element 7 to the reinforcement layer 8, the contact area between the rigid and stiff core element 7 and the fibers of the reinforcement structure 8 may be improved. In addition, the application of a defined amount of meltable adhesive as well as an even distribution of the meltable adhesive is facilitated using the adhesive sheet 11 for manufacturing the preform part 6.

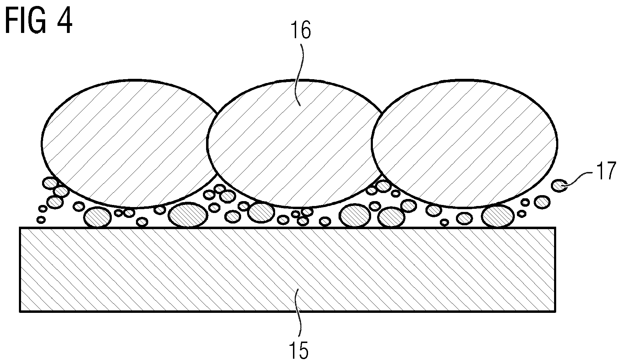

In fig. 4, a bonding between a core element 15 and fibersbased reinforcement structure 16 using a powder binder 17 is depicted. As it can be seen, the powder particles of the powder binder 17 tend to agglomerate in the voids between the fibers of the reinforcement structure 16, so that they are not available for bonding towards the core element 15. Due to the flat surface and the stiff structure of the core element 15, the contact between the core element 15 and the reinforcement structure 16 is nor as close as in between two flexible and smooth reinforcement structures.

By using an adhesive sheet 11 instead of the powder binder, the contact area between the reinforcement structure 8 and the core element 7 may be increased improving the attachment of the reinforcement structure 8 on the core element 7. Using the adhesive sheet avoids that the powder binder particles fall in between the fibers, or bundles of fibers, respectively, of the reinforcement structure 8 which would make them unavailable for bonding to the core element 15. For the bonding between the reinforcement structure 8 and the further reinforcement structure 14, a powder binder may be used, since the flexibility of the smooth fibers of the reinforcement structure can be brought into close contact to obtain a large contact area between the reinforcement structures.

Although the present invention has been described in detail with reference to the preferred embodiment, the present invention is not limited by the disclosed examples from which the skilled person is able to derive other variations without departing from the scope of the invention.

## Claims

1. Method for manufacturing a preform part (6) for a wind turbine blade (2), comprising the steps:
- Providing at least one rigid core element (7), at least one reinforcement structure (8) consisting of a fiber-based material and at least one adhesive sheet (11) of a meltable adhesive,
- Arranging the adhesive sheet (11) in between the core element (7) and the reinforcement structure (8), and
- Bonding the core element (7) to the reinforcement structure (8) by heating and subsequent cooling of the adhesive sheet (11) for creating an adhesive layer (9) between the core element (7) and the reinforcement structure (8), wherein the adhesive layer (9) consists of the adhesive and is partially pervious for a liquid.

2. Method according to claim 1, **characterized in that** an adhesive layer (9) comprising holes (10), which are passable by a liquid, is created.

3. Method according to claim 2, **characterized in that** the holes (10) in the adhesive layer (9) are created during heating and/or cooling of the adhesive sheet (11) and/or that an adhesive sheet (11) comprising holes (12) is used, wherein the holes (12) in the adhesive sheet (11) form the holes (10) in the adhesive layer (9) after heating and cooling of the adhesive sheet (11).

4. Method according to claim 2 or 3, **characterized in that** the hole density in the adhesive layer (9) is at least 50 %.

5. Method according to one of the preceding claims, **characterized in that** a perforated foil and/or a plurality of interconnected strands (13), in particular a mesh, a grid, a web, and/or a fleece, of the meltable adhesive is used as adhesive sheet (11).

6. Method according to one of the preceding claims, **characterized in that** an adhesive sheet (11) with a thickness between 10 µm and 150 µm, in particular between 50 µm and 100 µm, is used.

7. Method according to one of the preceding claims, **characterized in that** a meltable adhesive with a melting temperature between 70 °C and 140 °C, preferably between 80 °C and 120 °C, is used.

8. Method according to one of the preceding claims, **characterized in that** a core element (7) comprising or consisting of balsa wood and/or a polymer material is used and/or that a reinforcement structure (8) consisting of glass fibers, carbon fibers, and/or aramid fibers is used.

9. Method according to one of the preceding claims, **characterized in that** at least one further reinforcement (14) structure consisting of a fiber-based material and at least one further adhesive are provided, wherein the further reinforcement structure (14) is stacked on the reinforcement structure (8) and bonded to the reinforcement structure (8) using the further adhesive.

10. Preform part comprising at least one rigid core element (7), at least one reinforcement structure (8) consisting of a fiber-based material and an adhesive layer (9) arranged in between the core element (7) and the reinforcement structure (8) bonding the core element (7) to the reinforcement structure (8), wherein the adhesive layer (9) is formed from at least one molten and subsequently solidified adhesive sheet (11).

11. Preform part according to claim 10, **characterized in that** the adhesive layer (9) comprises a perforated foil and/or interconnected strands, in particular a mesh, a grid, a web, and/or a fleece, of the molten and solidified adhesive.

12. Preform part according to claim 10 or 11, **characterized in that** the adhesive layer (9) comprises holes (10), which are passable by a liquid.

13. Preform part according to claim 12, **characterized in that** the hole density in the adhesive layer (9) is at least 50 % .

14. Wind turbine blade comprising at least one preform part (6) according to one of the claims 10 to 13.

15. Wind turbine comprising at least one wind turbine blade (2) according to claim 14.
